# EUROPEAN PATENT SPECIFICATION

(11) **EP 3 216 077 B1**
(45) Date of publication and mention of the grant of the patent: **29.05.2019**
(21) Application number: 14802335.1
(22) Date of filing: 06.11.2014
(51) Int. Cl.: H01M 8/04082, H01M 16/00, H01M 12/08, B60L 11/18

(54) **METHOD AND SYSTEM FOR OPERATING A METAL AIR BATTERY BY A CONTROLLED SUPPLY OF OXYGEN**
VERFAHREN UND SYSTEM ZUM BETREIBEN EINER METALL-LUFT-BATTERIE MIT GESTEUERTER SAUERSTOFFVERSORGUNG
PROCÉDÉ ET SYSTÈME POUR FAIRE FONCTIONNER UNE BATTERIE MÉTAL-AIR PAR UNE ALIMENTATION COMMANDÉE EN OXYGÈNE

(43) Date of publication of application: 13.09.2017
(73) Proprietor: Bayerische Motoren Werke Aktiengesellschaft, 80809 München (DE)
(72) Inventor: NÜRNBERGER, Simon, 83043 Bad Aibling (DE); LAMP, Peter, 86899 Landsberg am Lech (DE); OBERHUMER, Philipp, 80638 München (DE); PASCHOS, Odysseas, 80805 München (DE); TSIOUVARAS, Nikolaos, 80798 München (DE); HANDA, Tokuhiko, Tokyo 1600004 (JP); NISHIKOORI, Hidetaka, Shizuoka Shizuoka 410-1113 (JP); INOUE, Toshihiko, Shizuoka Shizuoka 411-0044 (JP)
(74) Representative: Hahner, Ralph
(86) International application number: PCT/EP2014/073917
(87) International publication number: WO 2016/070923

(56) References cited:
- WO-A1-2014/009951
- JP-A- 2011 222 427
- US-A- 5 560 999
- US-A1- 2010 112 399

## Description

The invention concerns a method for supplying electrical energy, particularly in a vehicle or stationary application, by operating a metal air battery, particularly a lithium air battery, based on a stoichiometric supply of oxygen

The metal air battery is operated with ambient air.

Electric vehicles, including vehicles with an internal combustion engine such as a range extender to produce electricity on long voyages, hybrid vehicles and derivates thereof become more and more popular due to ecologic reasons, a limited supply of fossil fuels and research advances.

Particularly, a steady stream of advances in battery research has put large numbers of hybrid electric vehicles on city streets and highways. Additional advances are having a similar effect on so-called plug-in hybrids, hybrid automobiles that can be recharged at home. Despite these successes for electrically propelled cars, both types of hybrid vehicles strongly depend on petroleum-fueled internal combustion engines for distance driving.

In order to fully establish electric vehicles in the market, a storage battery of practical size and weight and affordable price is needed that can provide enough electrical energy in a single charge for a motorist to drive at least a few hundred miles. In light of these requirements, a focus of the electric vehicle industry in battery research is directed to so-called metal air batteries, which are, for example, described in U.S. patent 5,510,209.

These metal air batteries provide a high theoretical electrical capacity, particularly when the oxygen mass is excluded. This means that the oxygen needed for operating the metal air battery has to be taken from the ambient air instead of supplying it from an oxygen reservoir. When generating power, this oxygen reacts at the cathode of a lithium oxygen cell with lithium to LiO₂ and/or Li₂O₂. In this reaction, one mole O₂ releases two moles electrons. Nevertheless, oxygen should not diffuse from the cathode to the anode since it penetrates into the anode electrode degrading the anode.

When ambient air as O₂-source is utilized to operate a metal air battery in order to achieve the high energy densities desirable for mobile applications such as in vehicles, water and preferably also CO₂ have to be reliably removed from the ambient air in order to avoid undesired (devastating) reactions in the metal air battery, especially if the battery is a lithium air battery.

Especially when envisaged for automobile applications, the power response of high capacity batteries such as metal air batteries tends to be slow. In particular the maximum power which can be drawn from such high capacity batteries is not enough to cover peak demands of vehicles, for example when accelerating or climbing an ascending slope. Furthermore, due to the functioning by chemical reaction, a variable control of the output of the high capacity batteries, such as metal air batteries, tends to be difficult since the chemical reaction can be controlled with a certain time-lag only.

In order to be able to better cover variable power rates and enhance the maximum power which can be delivered by an energy storage device, European patent 1 377 477 B1 proposes a power source for supplying electrical power to a driving motor comprising a first rechargeable energy battery and a second rechargeable power battery and a battery controller capable of controlling a substantially continuous recharging of the power battery with electrical energy from the energy battery. Metal air batteries known from prior art are disclosed in the documents US 2010/112399 A1, US 5 560 999 A and JP 2011 222427 A.

Departing from this prior art, it is an object of the present invention to provide for supplying electrical energy, particularly in a vehicle, wherein the system comprises a metal air battery, particularly a lithium air battery, allowing a safe operation of the metal air battery with a high cycle-lifetime and/or calendar-lifetime. Another object of the present invention is to provide a system capable of covering high power peaks needed to operate electric propulsion of a vehicle while maintaining the high cycle-lifetime and/or high calendar-lifetime.

These objects are achieved by a method for supplying electrical energy according to claim 1 and a system for supplying electrical energy according to claim 9. Advantageous embodiments of the present invention are claimed in the depending claims.

The inventive method for supplying electrical energy, particularly in a vehicle, comprises the following steps: operating a metal air battery operated with ambient air; preparing air being supplied to the metal air battery; determining a demand of oxygen of the metal air battery; determining, particularly measuring, an oxygen concentration in the ambient air; and controlling an amount of ambient air supplied to the metal air battery by means of stoichiometry to avoid a high oxygen excess; wherein the amount of oxygen supplied to the metal air battery is based on the oxygen concentration comprised in the ambient air, and wherein the amount of air or the concentration of oxygen in the air supplied to the metal air battery is controlled to control the amount of oxygen supplied.

The inventive system for supplying electrical energy, particularly in a vehicle, comprises a metal air battery, particularly a lithium air battery, a gas sensor for measuring a concentration of oxygen in aspirated air,a conditioning module being adapted to prepare air being supplied to the metal air battery, and a control module being adapted to control an amount of oxygen supplied to the metal air battery by means of stoichiometry to avoid a high oxygen excess, wherein the system is operated with ambient air and the control module is adapted to control the amount of supplied oxygen based on the oxygen concentration comprised in the aspirated ambient air, the amount of air supplied to the metal air battery being controlled to control the amount of oxygen supplied.

Preparing or conditioning air in the sense of the invention is applying any system to the air for preparing the same to operate a metal air battery, such as a coarse filter to remove particles from the air.

A module in the sense of the invention is a hardware comprising at least one device and/or software implementing a certain function.

The invention is based on the approach that the amount of oxygen molecules delivered to the cathode of the metal air battery essentially matches the consumption of oxygen needed for releasing a certain electrical power. This avoids a high oxygen O₂ excess (overpressure) which can lead to a diffusion of oxygen through an electrolyte to a negative electrode side. Such a diffusion leads to undesired side-reactions, e.g. with the product Li₂O₂ at the anode. As a consequence, the metal air battery, in particular a lithium air battery loses capacity reducing the cycle-lifetime as well as the calendar-lifetime of the metal air battery. With respect to this it has to be noted that the higher the oxygen concentration on the cathode side, the higher the crossover of oxygen from the anode side of the metal air battery.

With the method and system according to the present invention, the concentration of oxygen at the cathode can be reduced to a minimum. This prevents a diffusion of oxygen from the cathode to the anode. Since other measures to prevent such a diffusion within a metal air battery cell can be omitted (such as an oxygen removal membrane), this leads also to a more efficient design of the cell, saving space and weight which is especially important in mobile applications such as in vehicles.

In summary, the invention allows a safe operation of the metal air battery while maintaining a high cycle-lifetime and calendar-lifetime.

In a further advantageous embodiment of the inventive method, the metal air battery is operated with ambient air and the amount of oxygen supplied to the metal air battery is based on an oxygen concentration comprised in the ambient air and the method further comprises the step of preparing air being supplied to the metal air battery.

In a further advantageous embodiment of the inventive method, the method further comprises a step of determining a power demand, preferably the power demand of a vehicle, particularly the power demand of an electrical propulsion of the vehicle, wherein the amount of oxygen supplied to the metal air battery and/or concentration of oxygen in the supplied air is controlled at least as a function of the electrical power demand. This embodiment of the present invention is especially advantageous when a quick response to a power demand is desired, such in electrical propulsion in a vehicle.

According to the invention the method comprises the step of determining, particularly measuring, an oxygen consumption of the metal air battery, when the amount of oxygen supplied to the metal air battery and/or concentration of oxygen in the supplied air is controlled at least is a function of the oxygen consumption. This embodiment applies where an excess of oxygen shall be absolutely avoided at the cathode side of a metal air battery. Thus, the control assures that only an amount of oxygen consumed is replaced by the amount of air supplied.

In a further advantageous embodiment of the inventive method, the method further comprises the step of determining, particularly measuring, an electrical potential supplied by the metal air battery, when the amount of oxygen supplied to the air battery and/or a concentration of oxygen in the supplied air is controlled at least as a function of the electrical potential. In order to avoid an oxygen excess at the cathode side of the metal air battery, it is also possible to determine the consumption of oxygen for generating electrical energy in the metal air battery by the delivered electrical potential. This avoids the use of further sensors, such as gas sensors, to determine the consumption.

According to the present invention the method comprises the step of determining, particularly measuring, oxygen concentration in the ambient air.

In a further advantageous embodiment of the inventive method, the method comprises the following steps: supplying a substantial constant first electrical power by the metal air battery, preferably a lithium air battery, wherein the metal air battery is a high capacity battery and supplying a variable second electrical power by a high power battery, preferably lithium ion battery: Preferably, the method comprises the further step of determining the power demand of a load, particularly electrical propulsion, and adapting the supplied electrical power to the electrical power demand of the load.

In a further advantageous embodiment of the inventive method, the method comprises the step of charging high power battery with electrical energy from a high capacity battery, if the power delivered by the high capacity battery is higher than the power demand of the load.

The aspects of the invention and the respective disclosed features with respect to the inventive method are also valid for the aspects of the invention in the respective advantageous embodiments of an inventive system and vice versa.

According to the present invention the system is operated with ambient air and the control module is adapted to control the amount of supplied oxygen based on an oxygen concentration comprised in the ambient air, further comprising a conditioning module being adapted to prepare air being supplied to the metal air battery.

In a further advantageous embodiment of the inventive system, the system comprises a first sensor adapted to determine the power demand, preferably the power demand of a vehicle, particularly the power demand of an electrical propulsion system of a vehicle and the control module is adapted to control the amount of supplied oxygen and/or the concentration of oxygen in supplied air at least as a function of the electrical power demand.

In a further advantageous embodiment of the inventive system, the system further comprises a second sensor adapted to determine, particularly measure, an oxygen consumption of the metal air battery, wherein the control module is adapted to control the amount of supplied oxygen and/or the concentration of oxygen in supplied air at least as a function of the oxygen consumption.

In a further advantageous embodiment of the inventive system, the system further comprises a third sensor adapted to determine, particularly measure, an electrical potential supplied by the metal air battery, wherein the control module is adapted to control the amount of supplied oxygen and/or the concentration of oxygen in supplied air at least as a function of the electrical tension.

In a further advantageous embodiment of the present invention, the metal air battery is a high capacity battery, wherein the system further comprises a high power battery, particularly a lithium ion battery, a super capacitor, or any other electrochemical energy storage device, wherein the high capacity battery and the high power battery form a battery hybrid system in which the high capacity battery is adapted to provide a substantially constant first electrical power and the high power battery is adapted to provide a temporary variable second electrical power, wherein the second electrical power is higher than the first electrical power and/or specific energy density of the high capacity battery is 1,5 to 200, preferably 1,5 to 50, more preferably 1,5 to 10, and most preferably 1,5 to 4,5 times higher as the specific energy density of the high power battery. Such battery hybrid system provides a large range of advantages with respect to operating applications where a lot of different power requirements have to be covered, such as in vehicles with electrical propulsion.

Further advantageous aspects and examples of the present invention will be apparent from the description of the following figures:
Figure 1 shows at least partially schematically a first preferred embodiment of the inventive system installed in a vehicle; and
Figure 2 shows partially schematically a sequence of steps representing a preferred embodiment of the inventive method.

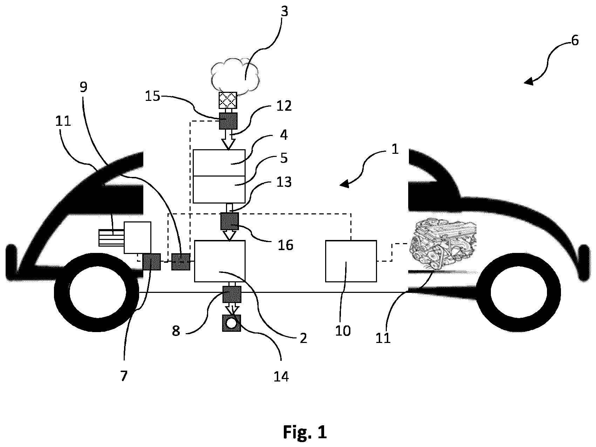

Figure 1 shows a first embodiment of an inventive system 1 for supplying electrical energy in a vehicle 6.

The system 1 comprises a metal air battery 2, particularly a lithium air battery. This metal air battery 2 being a high capacity battery is preferably operated in a manner to provide a substantially constant power to the vehicle 6. The oxygen O₂ needed to oxidize the lithium Li when generating electrical energy is taken from the ambient air 3 and/or supplied from a reservoir.

According to the present invention ambient air is used wherein a conditioning module 4 prepares the aspirated air 12 for further processing in the system 1. Such preparation preferably comprises a filtering, at least of coarse particles, hydrocarbons and fine dust, in the ambient air 3 as well as a tempering of the aspirated air 12 if necessary for the further processing. In a control module 5, the amount of oxygen (13) supplied to the metal air battery and/or concentration of oxygen in air (13) supplied to the metal air battery 2 is controlled by means of stoichiometry. For this, the concentration of oxygen in the aspirated air 12 is measured by a gas sensor 15. A control module 5 then controls the amount of oxygen supplied to the metal air battery 2. Preferably a compressor 16 is provided to change the pressure of the supplied air. There are several preferred ways of controlling the amount of oxygen supplied: On the one hand, the amount of air supplied to the metal air battery 2 can be controlled, where the amount of oxygen in the air is calculated from the concentration of oxygen in the aspirated air 12 measured by gas sensor 15. On the other hand, it is possible to alter the concentration of oxygen in the supplied air 13, e.g. by lowering the concentration of oxygen with an oxygen consuming process. Furthermore, the amount of oxygen received by the metal air battery 2 can be preferably altered by varying a flow of supplied gas 13, a variation of pressure in the metal air battery 2 and or by a use of membranes to produce an oxygen-enriched supplied gas 13. The so modified gas 13 is then supplied to the metal air battery 2, where the oxygen in the supplied gas 13 reacts at the cathode of the metal air battery 2 with the metal, preferably lithium Li to LiO₂ or Li₂O₂ releasing electrons which build up a potential for supplying electrical power to a vehicle 6. The exhaust gas 14 of the metal air battery 2 preferably leaves the system 1 and/or the vehicle 6 via an exhaust pipe.

Electrical energy produced by the metal air battery 2 may be used to propel the vehicle 6 by the electrical propulsion 11 or may be used to charge a high power battery 10, preferably a lithium ion battery, a super capacitor and/or any other electrochemical energy storage device.

Several sensors 7, 8, 9, 15 are alternatively or cumulatively arranged at different positions of the system 1 in order to generate information useful for controlling an amount of oxygen supplied to the metal air battery 2. A first sensor 7 may be preferably arranged in the power supply of electrical propulsion 11 or in the electrical propulsion device 11 itself to determine, particularly measure, the power demand of the electrical propulsion 11. Based on this power demand which has to be satisfied by the metal air battery 2, preferably being a high capacity battery, and the high power battery 10, the amount of electrons which have to be released by the metal air battery 2 can be calculated taking into consideration different electric resistances in the system 1 and/or the vehicle 6 and potentially further power consumers in vehicle 6. By a further stoichiometric calculation, the amount of oxygen molecules can be determined which have to be delivered to the metal air battery 2 via the supplied gas 13 to release the desired power. Preferably, the system 1 comprises a microcomputer to perform these actions, which is preferably associated to the control module 5. Based on the needed amount of oxygen molecules in the metal air battery 2, the control module 5 either adapts the concentration of oxygen in a flow of aspirated air 12 and/or adapts the amount of oxygen supplied to the metal air battery 2 in order to meet the oxygen demand.

According to further embodiments of the present invention, corresponding processes are preferably defined with respect to a second sensor 8 measuring an oxygen consumption of the metal air battery 2 or a third sensor 9 measuring an electrical potential supplied by the metal air battery.

The second sensor 8 measures residual oxygen in an exhaust gas 14 of the metal air battery 2. If residual oxygen is present in the exhaust gas 14 of the metal air battery 2, a comparison with an oxygen concentration in the aspirated air 12 measured by a fourth sensor 15 reveals the oxygen consumption of the metal air battery 2.

Based on this calculation, control module 5 can adapt the oxygen supply in the supplied gas 13 to the actual consumption of the metal air battery 2 such that no oxygen excess remains at the cathode side in the metal air battery 2 leading to the residual oxygen in the exhaust gas 14. The third sensor 9 is preferably arranged in the electrical circuit 3 of the metal air battery 2 and measures an electrical potential supplied by the metal air battery 2. Based on this electrical potential, the number of electrons released by the metal air battery 2 can be calculated taking into consideration the internal resistance of the metal air battery 2. From this, by means of stoichiometric calculation, the actual consumption of the metal air battery 2 in order to supply the measured electrical potential can be calculated and the control module 5 can adapt the amount of oxygen supplied to the metal air battery 2 accordingly to avoid an oxygen excess at the cathode.

Preferably, the system 1 not only comprises several of the mentioned sensors 7, 8, 9, 15, and the control module 5 is adapted to apply different operation strategies for the metal air battery 2 with respect to the oxygen supply depending on the operational state of the system 1 and/or the vehicle 6.

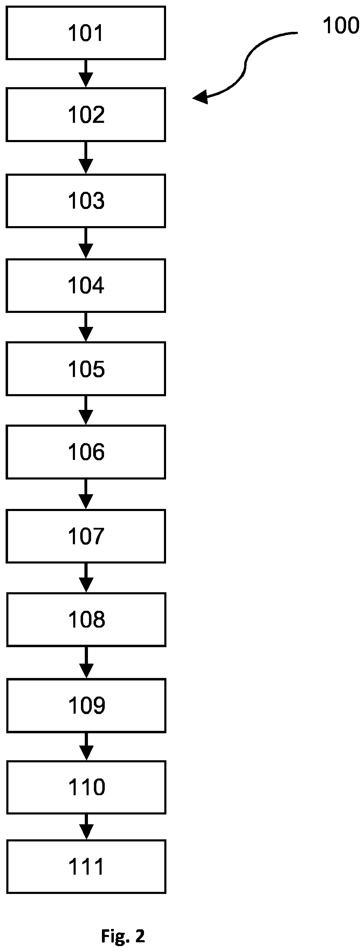

Figure 2 shows a preferred embodiment of the inventive method 100 to operate a system 1 as specified with respect to Figure 1. It is evident to the person skilled in the art that the steps shown in Figure 2 may be arranged in a different order. In the inventive method 100, a metal air battery 2, particularly a lithium air battery, is operated with ambient air, 101. Therefore, gas 13 being supplied to the metal air battery 2 is prepared, 102. This may comprise a filtering of coarse particles from ambient air 3 by a filter at the in-take of the inventive system 1 but also other processes such as conditioning of the aspirated air 12 in order to reach a certain temperature. Preferably the power demand of the vehicle 6 or the power demand of the electrical propulsion 11 of the vehicle 6 is determined 103. Alternatively or additionally, an oxygen consumption of the metal air battery 2 is determined, particularly measured, 104 and/or an electrical potential supplied by the metal air battery 2 is determined, particularly measured, 105.

Based on at least one of the determined power demands, the oxygen consumption and the electrical potential, the amount of oxygen to be supplied to the metal air battery 2 is calculated, 106. Based on this calculated demand, the amount of oxygen supplied to the metal air battery 2 is controlled, 107.

Preferably, according to the inventive method 100, a substantial first electrical power is supplied by the metal air battery 2, wherein the metal air battery 2 serves as a high capacity battery, 108. Further preferably, a variable second electrical power is supplied by a high power battery 8, preferably a lithium ion battery, 109. Further preferably, a power demand of a load, particularly electrical propulsion 14 is determined, 110 and the supplied second electrical power is adapted to the power of the load, 111. Preferably, in the case that the power delivered by the high capacity battery 2 is higher than the power demand of the load, the high power battery 10 is charged with electrical energy generated by the high capacity battery 2.

### LIST OF REFERENCE NUMERALS

- 1: System
- 2: Metal air battery
- 3: Ambient air
- 4: Conditioning module
- 5: Control module
- 6: Vehicle
- 7: First sensor
- 8: Second sensor
- 9: Third sensor
- 10: High power battery
- 11: Electrical propulsion
- 12: Aspirated air
- 13: Supplied gas
- 14: Exhaust gas
- 15: Fourth sensor
- 16: Air compressor

## Claims

1. Method (100) for supplying electrical energy, particularly in a vehicle (6) comprising the following steps:
operating (101) a metal air battery (2) operated with ambient air (3);
preparing (102) air (13) being supplied to the metal air battery (2);
determining (106) a demand of oxygen of the metal air battery (2);
determining (107), particularly measuring, an oxygen concentration in the ambient air (3); and
controlling (108) an amount of ambient air supplied to the metal air battery (2) by means of stoichiometry to avoid a high oxygen excess;
wherein the amount of oxygen supplied to the metal air battery (2) is based on the oxygen concentration comprised in the ambient air (3), and wherein the amount of air (13) or the concentration of oxygen in the air (13) supplied to the metal air battery (2) is controlled to control the amount of oxygen supplied.

2. Method (100) according to claim 1 further comprising the following step:
determining (103) a power demand, preferably the power demand of a vehicle (6), particularly the power demand of an electrical propulsion (11) of the vehicle (6), wherein an amount of the supplied oxygen and/or a concentration of oxygen in the supplied air (13) is controlled at least as a function of an electrical power demand.

3. Method (100) according to one of the preceding claims, further comprising the following step:
determining (104), particularly measuring, an oxygen consumption of the metal air battery (2), wherein an amount of the supplied oxygen and/or a concentration of oxygen in the supplied air (13) is controlled at least as a function of the oxygen consumption.

4. Method according to one of the preceding claims, further comprising the following step:
determining (105), particularly measuring, an electrical potential supplied by the metal air battery (2), wherein an amount of the supplied oxygen and/or a concentration of oxygen in the supplied air (13) is controlled at least as a function of the electrical potential.

5. Method (100) according to one of the preceding claims, further comprising the following step:
measuring residual oxygen in an exhaust gas 14 of the metal air battery 2.

6. Method (100) according to claim 5, wherein the oxygen concentration in the aspirated air 12 is compared to the residual oxygen for revealing the oxygen consumption of the metal air battery 2.

7. Method (100) according to one of the preceding claims, further comprising the following steps:
supplying (108) a substantially constant first electrical power by the metal air battery (2), wherein the metal air battery is a high capacity battery;
supplying (109) a variable second electrical power by a high power battery (8), preferably a lithium ion battery;
determining (110) a power demand of a load, particularly an electrical propulsion (14); and
adapting (111) the supplied second electrical power to the electrical power demand of the load,
wherein a specific energy density of the high capacity battery (2) is 1,5 to 200 times higher compared to a specific energy density of the high power battery (10).

8. Method (100) according to claim 5, further comprising the following step:
charging (112) the high power battery (10) with electrical energy from the high capacity battery (2), if the power delivered by the high capacity battery (2) is higher than the power demand of the load.

9. System (1) for supplying electrical energy, particularly in a vehicle (6), comprising:
a metal air battery (2), particularly a lithium air battery,
a gas sensor (15) for measuring a concentration of oxygen in aspirated air (12),
a conditioning module (4) being adapted to prepare air (13) being supplied to the metal air battery (2), and
a control module (5) being adapted to control an amount of oxygen supplied to the metal air battery (2) by means of stoichiometry to avoid a high oxygen excess,
wherein the system (1) is operated with ambient air (3) and the control module (5) is adapted to control the amount of supplied oxygen based on the oxygen concentration comprised in the aspirated ambient air (12), the amount of air (12) supplied to the metal air battery being controlled to control the amount of oxygen supplied.

10. System (1) according to claim 9 , further comprising:
a first sensor (7) adapted to determine a power demand, preferably the power demand of a vehicle (6), particularly the power demand of an electrical propulsion system (11) of the vehicle (6), wherein the control module (5) is adapted to control the amount of the supplied oxygen and/or the concentration of oxygen in the supplied air (12) at least as a function of an electrical power demand.

11. System (1) according to claim 9 or 10, further comprising:
a second sensor (8) adapted to determine, particularly measure, an oxygen consumption of the metal air battery (2), wherein the control module (5) is adapted to control the amount of the supplied oxygen and/or the concentration of oxygen in the supplied air (12) at least as a function of the oxygen consumption.

12. System (1) according to one of claims 9 to 11, further comprising:
a third sensor (9) adapted to determine, particularly measure, an electrical potential supplied by the metal air battery (2), wherein the control module (5) is adapted to control the amount of the supplied oxygen and/or the concentration of oxygen in the supplied air (12) at least a function of the electrical tension.

13. System (1) according one of claims 9 to 12, wherein the metal air battery (2) is a high capacity battery, wherein the system (1) further comprises a high power battery (10), particularly a lithium ion battery, a super capacitor, or any other electrochemical energy storage device, wherein the high capacity battery (2) and the high power battery (10) form a battery hybrid system in which the high capacity battery (2) is adapted to provide a substantially constant first electrical power and the high power battery (10) is adapted to provide temporary a variable second electrical power, wherein the second electrical power is higher than the first electrical power and/or specific energy density of the high capacity battery (2) is 1,5 to 200, preferably 1,5 to 50, more preferably 1,5 to 20 and most preferably 1,5 to 10 times higher compared to specific energy density of the high power battery (10).

14. System (1) according one of claims 9 to 13, further comprising a second sensor (8) for measuring residual oxygen in an exhaust gas (14) of the metal air battery (2), wherein the control module (5) is further adapted to adapt the oxygen supply in the supplied gas (13) to the actual consumption of the metal air battery (2).

15. Vehicle (6) comprising an electrical propulsion (11), wherein electrical energy used for the electrical propulsion (11) is stored in a system (1) according to one of claims 7 to 14.

## Patentansprüche

1. Verfahren (100) zum Zuführen von elektrischer Energie, insbesondere in einem Fahrzeug (6), aufweisend die folgenden Schritte:
Betreiben (101) einer mit Umgebungsluft (3) betriebenen Metall-Luft-Batterie (2);
Bereitstellen (102) von Luft (13), die der Metall-Luft-Batterie (2) zugeführt wird;
Ermitteln (106) eines Sauerstoffbedarfs der Metall-Luft-Batterie (2);
Ermitteln (107), insbesondere Messen, einer Sauerstoffkonzentration in der Umgebungsluft (3); und
Steuern (108) einer der Metall-Luft-Batterie (2) zugeführten Umgebungsluftmenge mittels Stöchiometrie, um einen hohen Sauerstoffüberschuss zu vermeiden;
wobei die der Metall-Luft-Batterie (2) zugeführte Sauerstoffmenge auf der in der Umgebungsluft (3) enthaltenen Sauerstoffkonzentration basiert und wobei die Luftmenge (13) oder die Sauerstoffkonzentration in der der Metall-Luft-Batterie (2) zugeführten Luft (13) gesteuert wird, um die zugeführte Sauerstoffmenge zu steuern.

2. Verfahren (100) nach Anspruch 1, ferner aufweisend den folgenden Schritt:
Ermitteln (103) eines Leistungsbedarfs, vorzugsweise des Leistungsbedarfs eines Fahrzeugs (6), insbesondere des Leistungsbedarfs eines elektrischen Antriebs (11) des Fahrzeugs (6), wobei eine Menge des zugeführten Sauerstoffs und/oder eine Sauerstoffkonzentration in der zugeführten Luft (13) zumindest in Abhängigkeit von einem elektrischen Leistungsbedarf gesteuert wird.

3. Verfahren (100) nach einem der vorhergehenden Ansprüche, ferner aufweisend den folgenden Schritt:
Ermitteln (104), insbesondere Messen, eines Sauerstoffverbrauchs der Metall-Luft-Batterie (2), wobei eine Menge des zugeführten Sauerstoffs und/oder eine Sauerstoffkonzentration in der zugeführten Luft (13) zumindest in Abhängigkeit vom Sauerstoffverbrauch gesteuert wird.

4. Verfahren nach einem der vorhergehenden Ansprüche, ferner aufweisend den folgenden Schritt:
Ermitteln (105), insbesondere Messen, eines von der Metall-Luft-Batterie (2) bereitgestellten elektrischen Potentials, wobei eine Menge des zugeführten Sauerstoffs und/oder eine Sauerstoffkonzentration in der zugeführten Luft (13) zumindest in Abhängigkeit vom elektrischen Potential gesteuert wird.

5. Verfahren (100) nach einem der vorhergehenden Ansprüche, ferner aufweisend den folgenden Schritt:
Messen von Restsauerstoff in einem Abgas 14 der Metall-Luft-Batterie 2.

6. Verfahren (100) nach Anspruch 5, wobei die Sauerstoffkonzentration in der angesaugten Luft 12 mit dem Restsauerstoff verglichen wird, um den Sauerstoffverbrauch der Metall-Luft-Batterie 2 zu offenbaren.

7. Verfahren (100) nach einem der vorhergehenden Ansprüche, ferner aufweisend die folgenden Schritte:
Bereitstellen (108) einer im Wesentlichen konstanten ersten elektrischen Leistung durch die Metall-Luft-Batterie (2), wobei die Metall-Luft-Batterie eine Hochkapazitätsbatterie ist;
Bereitstellen (109) einer variablen zweiten elektrischen Leistung durch eine Hochleistungsbatterie (8), vorzugsweise eine Lithium-Ionen-Batterie;
Ermitteln (110) eines Leistungsbedarfs einer Last, insbesondere eines elektrischen Antriebs (14); und
Anpassen (111) der bereitgestellten zweiten elektrischen Leistung an den elektrischen Leistungsbedarf der Last,
wobei eine spezifische Energiedichte der Hochkapazitätsbatterie (2) 1,5 bis 200 mal höher ist als eine spezifische Energiedichte der Hochleistungsbatterie (10).

8. Verfahren (100) nach Anspruch 5, ferner aufweisend den folgenden Schritt:
Laden (112) der Hochleistungsbatterie (10) mit elektrischer Energie aus der Hochkapazitätsbatterie (2), wenn die von der Hochkapazitätsbatterie (2) abgegebene Leistung höher ist als der Leistungsbedarf der Last.

9. System (1) zur Versorgung mit elektrischer Energie, insbesondere in einem Fahrzeug (6), aufweisend:
eine Metall-Luft-Batterie (2), insbesondere eine Lithium-Luft-Batterie,
einen Gassensor (15) zum Messen einer Sauerstoffkonzentration in angesaugter Luft (12),
ein Konditionierungsmodul (4), das eingerichtet ist, um Luft (13) vorzubereiten, die der Metall-Luft-Batterie (2) zugeführt wird, und
ein Steuermodul (5), das eingerichtet ist, um mittels Stöchiometrie eine Menge an Sauerstoff zu steuern, die der Metall-Luft-Batterie (2) zugeführt wird, um einen hohen Sauerstoffüberschuss zu vermeiden,
wobei das System (1) mit Umgebungsluft (3) betrieben wird und das Steuermodul (5) eingerichtet ist, um die zugeführte Sauerstoffmenge basierend auf der in der angesaugten Umgebungsluft (12) enthaltenen Sauerstoffkonzentration zu steuern,
wobei die der Metall-Luft-Batterie zugeführte Luftmenge (12) gesteuert wird, um die zugeführte Sauerstoffmenge zu steuern.

10. System (1) nach Anspruch 9, ferner aufweisend:
einen ersten Sensor (7), der eingerichtet ist, einen Leistungsbedarf, vorzugsweise den Leistungsbedarf eines Fahrzeugs (6), insbesondere den Leistungsbedarf eines elektrischen Antriebssystems (11) des Fahrzeugs (6), zu ermitteln, wobei das Steuermodul (5) eingerichtet ist, die Menge des zugeführten Sauerstoffs und/oder die Konzentration von Sauerstoff in der zugeführten Luft (12) zumindest in Abhängigkeit von einem elektrischen Leistungsbedarf zu steuern.

11. System (1) nach Anspruch 9 oder 10, ferner aufweisend:
einen zweiten Sensor (8), der eingerichtet ist, um einen Sauerstoffverbrauch der Metall-Luft-Batterie (2) zu ermitteln, insbesondere zu messen, wobei das Steuermodul (5) eingerichtet ist, die Menge des zugeführten Sauerstoffs und/oder die Sauerstoffkonzentration in der zugeführten Luft (12) zumindest in Abhängigkeit vom Sauerstoffverbrauch zu steuern.

12. System (1) nach einem der Ansprüche 9 bis 11, ferner aufweisend:
einen dritten Sensor (9), der eingerichtet ist, um ein von der Metall-Luft-Batterie (2) bereitgestelltes elektrisches Potential zu ermitteln, insbesondere zu messen, wobei das Steuermodul (5) eingerichtet ist, die Menge des zugeführten Sauerstoffs und/oder die Sauerstoffkonzentration in der zugeführten Luft (12) zumindest in Abhängigkeit von der elektrischen Spannung zu steuern.

13. System (1) nach einem der Ansprüche 9 bis 12, wobei die Metall-Luft-Batterie (2) eine Hochkapazitätsbatterie ist, wobei das System (1) ferner eine Hochleistungsbatterie (10), insbesondere eine Lithium-Ionen-Batterie, einen Superkondensator oder eine andere elektrochemische Energiespeichervorrichtung aufweist, wobei die Hochkapazitätsbatterie (2) und die Hochleistungsbatterie (10) ein Batteriehybridsystem bilden, in dem die Hochkapazitätsbatterie (2) eingerichtet ist, eine im Wesentlichen konstante erste elektrische Leistung bereitzustellen, und die Hochleistungsbatterie (10) eingerichtet ist, vorübergehend eine variable zweite elektrische Leistung bereitzustellen, wobei die zweite elektrische Leistung höher als die erste elektrische Leistung ist und/oder die spezifische Energiedichte der Hochkapazitätsbatterie (2) 1,5 bis 200 mal, vorzugsweise 1,5 bis 50 mal, weiter vorzugsweise 1,5 bis 20 mal und am meisten bevorzugt 1,5 bis 10 mal höher als die spezifische Energiedichte der Hochleistungsbatterie (10) ist.

14. System (1) nach einem der Ansprüche 9 bis 13, ferner aufweisend einen zweiten Sensor (8) zum Messen von Restsauerstoff in einem Abgas (14) der Metall-Luft-Batterie (2), wobei das Steuermodul (5) ferner eingerichtet ist, um die Sauerstoffversorgung im zugeführten Gas (13) an den tatsächlichen Verbrauch der Metall-Luft-Batterie (2) anzupassen.

15. Fahrzeug (6) mit einem elektrischen Antrieb (11), wobei für den elektrischen Antrieb (11) verwendete elektrische Energie in einem System (1) nach einem der Ansprüche 7 bis 14 gespeichert ist.

## Revendications

1. Procédé (100) pour apporter de l'énergie électrique, en particulier dans un véhicule (6) comprenant les étapes suivantes consistant à :
actionner (101) une batterie métal-air (2) actionnée avec de l'air ambiant (3) ;
préparer (102) de l'air (13) apporté à la batterie métal-air (2) ;
déterminer (106) une demande d'oxygène de la batterie métal-air (2) ;
déterminer (107), en particulier mesurer, une concentration d'oxygène dans l'air ambiant (3) ; et
commander (108) une quantité d'air ambiant apporté à la batterie métal-air (2) par stoechiométrie afin d'éviter un excès d'oxygène élevé ;
dans lequel la quantité d'oxygène apporté à la batterie métal-air (2) est basée sur la concentration d'oxygène comprise dans l'air ambiant (3), et dans lequel la quantité d'air (13) ou la concentration d'oxygène dans l'air (13) apporté à la batterie métal-air (2) est commandée pour commander la quantité d'oxygène apporté.

2. Procédé (100) selon la revendication 1 comprenant en outre l'étape suivante consistant à :
déterminer (103) une demande de puissance, de préférence la demande de puissance d'un véhicule (6), en particulier la demande de puissance d'une propulsion électrique (11) du véhicule, dans lequel une quantité de l'oxygène apporté et/ou une concentration d'oxygène dans l'air apporté (13) sont commandées au moins en fonction d'une demande de puissance électrique.

3. Procédé (100) selon l'une des revendications précédentes, comprenant en outre l'étape suivante consistant à :
déterminer (104), en particulier mesurer, une consommation d'oxygène de la batterie métal-air (2), dans lequel une quantité de l'oxygène apporté et/ou une concentration d'oxygène dans l'air apporté (13) ont commandées au moins en fonction de la consommation d'oxygène.

4. Procédé selon l'une des revendications précédentes, comprenant en outre l'étape suivante consistant à :
déterminer (105), en particulier mesurer, un potentiel électrique apporté par la batterie métal-air (2), dans lequel une quantité de l'oxygène apporté et/ou une concentration d'oxygène dans l'air apporté (13) sont commandées au moins en fonction du potentiel électrique.

5. Procédé selon l'une des revendications précédentes, comprenant en outre l'étape suivante consistant à :
mesurer l'oxygène résiduel dans un gaz d'échappement 14 de la batterie métal-air 2.

6. Procédé selon la revendication 5, dans lequel la concentration d'oxygène dans l'air aspiré 12 est comparée à l'oxygène résiduel pour révéler la consommation d'oxygène de la batterie métal-air 2.

7. Procédé (100) selon l'une des revendications précédentes, comprenant en outre les étapes suivantes consistant à :
apporter (108) une première puissance électrique sensiblement constante par la batterie métal-air (2), dans lequel la batterie métal-air est une batterie à capacité élevée ;
apporter (108) une deuxième puissance électrique variable par une batterie à puissance élevée (8), de préférence une batterie aux ions lithium ;
déterminer (110) une demande de puissance d'une charge, en particulier une propulsion électrique (14) ; et
adapter (111) la deuxième puissance électrique apportée à la demande de puissance électrique de la charge,
dans lequel une densité d'énergie spécifique de la batterie à capacité élevée (2) est de 1,5 à 200 fois plus élevée qu'une densité d'énergie spécifique de la batterie à puissance élevée (10).

8. Procédé (100) selon la revendication 5, comprenant en outre l'étape suivante consistant à :
charger (112) la batterie à puissance élevée (10) avec de l'énergie électrique provenant de la batterie à capacité élevée (2), si la puissance délivrée par la batterie à puissance élevée (2) est supérieure à la demande de puissance de la charge.

9. Système (1) pour apporter de l'énergie électrique, en particulier dans un véhicule (6), comprenant :
une batterie métal-air (2), en particulier une batterie lithium-air,
un capteur de gaz (15) pour mesurer une concentration d'oxygène dans l'air aspiré (12),
un module de conditionnement (4) étant adapté pour préparer de l'air (13) apporté à la batterie métal-air (2), et
un module de commande (5) étant adapté pour commander une quantité d'oxygène apporté à la batterie métal-air (2) par stoechiométrie afin d'éviter un excès d'oxygène élevé,
dans lequel le système (1) est actionné avec l'air ambiant (3) et le module de commande (5) est adapté pour commander la quantité d'oxygène apporté sur la base de la concentration d'oxygène comprise dans l'air ambiant aspiré (12), la quantité d'air (12) apporté à la batterie métal-air étant commandée pour commander la quantité d'oxygène apporté.

10. Système (1) selon la revendication 9, comprenant en outre :
un premier capteur (7) adapté pour déterminer une demande de puissance, de préférence la demande de puissance d'un véhicule (6), en particulier la demande de puissance d'un système de propulsion électrique (11) du véhicule (6), dans lequel le module de commande (5) est adapté pour commander la quantité de l'oxygène apporté et/ou la concentration d'oxygène dans l'air apporté (12) au moins en fonction d'une demande de puissance électrique.

11. Système (1) selon la revendication 9 ou 10, comprenant en outre :
un deuxième capteur (8) adapté pour déterminer, en particulier mesurer, une consommation d'oxygène de la batterie métal-air (2), dans lequel le module de commande (5) est adapté pour commander la quantité de l'oxygène apporté et/ou la concentration d'oxygène dans l'air apporté (12) au moins en fonction de la consommation d'oxygène.

12. Système (1) selon l'une des revendications 9 à 11, comprenant en outre :
un troisième capteur (9) adapté pour déterminer, en particulier mesurer, un potentiel électrique apporté par la batterie métal-air (2), dans lequel le module de commande (5) est adapté pour commander la quantité de l'oxygène apporté et/ou la concentration d'oxygène dans l'air apporté (12) au moins en fonction de la tension électrique.

13. Système (1) selon l'une des revendications 9 à 12, dans lequel la batterie métal-air (2) est une batterie à capacité élevée, dans lequel le système (1) comprend en outre une batterie à puissance élevée (10), en particulier une batterie aux ions lithium, un super-condensateur, ou tout autre dispositif de stockage d'énergie électrochimique, dans lequel la batterie à capacité élevée (2) et la batterie à puissance élevée (10) forment un système hybride de batterie dans lequel la batterie à capacité élevée (2) est adaptée pour fournir une première puissance électrique sensiblement constante et la batterie à puissance élevée (10) est adaptée pour fournir une deuxième puissance électrique variable temporaire, dans lequel la deuxième puissance électrique est supérieure à la première puissance électrique et/ou la densité d'énergie spécifique de la batterie à capacité élevée (2) est de 1,5 à 200, de préférence de 1,5 à 50, plus préférablement de 1,5 à 20 et idéalement de 1,5 à 10 fois plus élevée que la densité d'énergie spécifique de la batterie à puissance élevée (10).

14. Système (1) selon l'une des revendications 9 à 13, comprenant en outre un deuxième capteur (8) pour mesurer l'oxygène résiduel dans un gaz d'échappement (14) de la batterie métal-air (2), dans lequel le module de commande (5) est en outre adapté pour adapter l'apport en oxygène dans le gaz apporté (13) à la consommation réelle de la batterie métal-air (2).

15. Véhicule (6) comprenant une propulsion électrique (11), dans lequel de l'énergie électrique utilisée pour la propulsion électrique (11) est stockée dans un système (1) selon l'une des revendications 7 à 14.
